# EUROPEAN PATENT SPECIFICATION

(11) **EP 4 570 507 B1**
(45) Date of publication and mention of the grant of the patent: **18.02.2026**
(21) Application number: 24186673.0
(22) Date of filing: 04.07.2024
(51) Int. Cl.: B41J 3/407, B23K 26/362, B23K 101/00, B41J 2/44

(54) **LABEL-FREE MARKING DEVICE USING LASER MARKING**
MARKIERUNGSFREIE MARKIERUNGSVORRICHTUNG MIT LASERMARKIERUNG
DISPOSITIF DE MARQUAGE SANS ÉTIQUETTE UTILISANT UN MARQUAGE LASER

(30) Priority: 15.12.2023 CN 202311727046
(43) Date of publication of application: 18.06.2025
(73) Proprietor: Shanghai Onlytec Equipment Co., Ltd., Shanghai (CN)
(72) Inventor: JIANG, Defu, Shanghai (CN); WANG, Yaofei, Shanghai (CN); LIN, Huaiyu, Shanghai (CN)
(74) Representative: Michalski Hüttermann & Partner Patentanwälte mbB

(56) References cited:
- DE-A1- 102018 000 405
- DE-U1- 202013 105 750
- TW-B- I 796 159

## Description

### Technical Field

The present invention relates to the technical field of packaging bottle identification printing equipment, in particular to a label-free marking device.

### Background Technology

Currently, adhesive labels (with numbers, text, logos, names, QR codes, barcodes, DM codes, information signs, etc.) are typically placed in middle portions of packaging bottle bodies. After use, the packaging bottle bodies are recycled. However, during the recycling process, it is necessary to remove the adhesive labels on the packaging bottle bodies, which consumes a lot of manpower and resources. Moreover, after removing the adhesive labels, adhesive residues are left on the packaging bottle bodies, resulting in the generation of harmful substances during disposal, leading to low energy-saving and environmental protection value.

In line with the concept of carbon reduction and environmental protection, the idea of "label-less PET bottles" has emerged in the past two years. Several leading companies have begun to layout in advance in response to energy conservation and carbon reduction. This omits affixing labels with brand logos and product-related information on the bottle body; instead, laser printing technology is applied to mark bottle bodies. By eliminating labels, it is possible to not only reduce the use of plastic in the production process, simplify the recycling of materials, but also decrease the recycling process. However, existing label-less PET bottles can only have a small amount of contents marked on bottle bodies by using laser machines. Complete product information can only be marked on the outer packaging, making it impossible for individual bottle sales and limiting sales channels, thus failing to meet the demand for large-scale, high-capacity production.

The patent application document with a publication number CN116967618A discloses an automatic production device for label-less packaging bottles, comprising a frame, wherein the frame is provided with a bottle conveying device and a bottle marking device, the bottle marking device comprises a rotating shaft mounted on the frame and an active ring disc coaxially fixed to the rotating shaft, on the frame is provided a drive mechanism to rotate the rotating shaft, and at top portions of the active ring disc are rotationally provided placement trays, the placement trays are arranged in a circular array along the circumferential direction of the active ring disc, at bottom portions of the active ring disc are provided self-rotating motors to drive the placement trays to rotate, a follow-up ring disc is coaxially fixed on the rotating shaft, on the follow-up ring disc are provided pressing assemblies corresponding to the placement trays, and, on the frame are provided laser heads for marking bottle bodies. However, the automatic production device for label-less packaging bottles has the following drawbacks: I. the laser heads for marking do not move with the active ring disc but are fixed on the frame, limiting the speed of the active ring disc's rotation and significantly reducing overall marking efficiency; II. during the bottle marking process by the laser heads, the rotation of the active ring disc can cause slight deformation of the markings, resulting in poor marking quality; III. the pressing assemblies use a cylinder-driven method to secure or release the bottle bodies, which is prone to malfunctions over time, and the cost of using cylinder-driven method is high. Therefore, further upgrades and iterations are urgently needed. DE202013105750U1 discloses a device for laser marking of bottles conveyed by a carousel, wherein the laser marking means rotate together with the carousel.

### Summary of the Invention

To solve above technical problems, the present invention provides a label-free marking device, connectable with an external conveying device, wherein the external conveying device comprises a conveyor, a feeding device and a discharging device, and the label-free marking device comprises:
a frame;
a disc-shaped conveying module, wherein the disc-shaped conveying module is connectable with both the feeding device and the discharging device, so as to allow packaging bottles to enter the disc-shaped conveying module from the feeding device, and to return to the conveyor through the discharging device once label printing on the disc-shaped conveying module is completed;
a laser marking module, wherein the laser marking module comprises laser heads, the laser heads are arranged on, and distributed around a circumference of, the disc-shaped conveying module, such that the laser heads are movable with the disc-shaped conveying module to mark the packaging bottles at corresponding positions;
a first driving module, wherein an output end portion of the first driving module is connected with the disc-shaped conveying module, so as to drive the disc-shaped conveying module to rotate;
specifically, the disc-shaped conveying module comprises a first rotating shaft, a first cam disc, a pair of first fixing frames, a first active rotating disc, a first follower disc, first pressing mechanisms and storage trays;
the first rotating shaft is connected to an output end portion of the first driving module;
the first cam disc is sleeved on the first rotating shaft and free from rotation of the first rotating shaft, and an outer ring of the first cam disc is provided with a first cam track;
the pair of first fixing frames are respectively arranged on both sides of the first cam disc and connected to the first cam disc, and are used to fix the first cam disc;
the first follower disc and the first active disc are sequentially sleeved on the first rotating shaft and are configured to rotate with the first rotating shaft; the first active disc is provided with storage trays for placing bottle bodies; and
the first follower disc is provided with first pressing mechanisms respectively corresponding to the storage trays one by one; sides of the first pressing mechanism are provided with first pulleys which are slidably connected to the first cam disc through the first cam track and are arranged to move up and down while moving along circumference of the first cam disc, so as to press or loosen the bottle bodies.

Furthermore, under the storage trays are correspondingly arranged rotating motors, and the rotating motors drive corresponding storage trays to rotate.

Furthermore, the first pressing mechanisms comprise first pressing assemblies and pairs of first guide rods;
the pairs of first guide rods are arranged on the first follower disc;
the first pressing assemblies are sleeved on the pairs of first guide rods and are arranged to slide along the pairs of first guide rods; and
the first pulleys are arranged at sides of the first pressing assemblies and are slidably connected to the first cam disc through the first cam track, and are arranged to move up and down while moving along circumference of the first cam disc.

Furthermore, the first pressing mechanisms further comprise pairs of first springs and pairs of clamping springs;
the pairs of first springs are respectively sleeved on the pairs of first guide rods;
the pairs of clamping springs respectively correspond to the pairs of first springs one by one, are respectively arranged at lower end portions of corresponding pairs of first springs, and are fixedly connected to the pairs of first guide rods; and
the pairs of first springs are arranged between the first pressing assemblies and the pairs of clamping springs.

Furthermore, the first pressing assemblies comprise first sliding frames, first pressing rods and first pressing sleeves;
the first sliding frames are sleeved on the pairs of first guide rods, and the first pulleys are arranged at sides of the first sliding frames;
end portions of the first pressing rods are connected to the first sliding frames, another end portions thereof are movably connected to the first pressing sleeves, and the first pressing sleeves are rotatable around shafts thereof.

Furthermore, the first pressing mechanisms further comprise first fixing plates, and the first fixing plates are disposed at upper end portions of the pairs of first guide rods and are fixedly connected to the pairs of first guide rods.

Furthermore, the laser marking module further comprises a second cam disc, lifting mechanisms, a second follower disc and laser head controllers;
the second cam disc is fixedly connected to the first cam disc via connecting columns, and a second cam track is arranged on an outer ring of the second cam disc;
the second follower disc is fixedly connected to the first follower disc through connecting columns, so as to move synchronously with the first follower disc;
the lifting mechanisms respectively correspond to and are connected to the laser heads one by one, and second pulleys are arranged at sides of the lifting mechanisms, the second pulleys are slidably connected to the second cam disc through the second cam track, and are arranged to move up and down while moving along circumference of the second cam disc; and
the laser head controllers respectively correspond to the laser heads one by one and are arranged on the second follower disc.

Furthermore, the lifting mechanisms comprise second sliding frames and pairs of second guide rods;
the second sliding frames are sleeved on the pairs of second guide rods and are arranged to slide relative to the pairs of second guide rods; the second pulleys are arranged at sides of the second sliding frames and are arranged to drive the second sliding frames to move; and
the pairs of second guide rods are fixedly connected to the first follower disc.

Furthermore, the lifting mechanisms further comprise second fixed plates and pairs of second springs;
the second fixing plates are arranged at upper end portions of the pairs of second guide rods and are fixedly connected to the pairs of second guide rods; and
the pairs of second springs are respectively arranged at two end portions of the second fixing plates, end portions of the second springs are connected to the second fixing plates, and another end portions thereof are connected to the second sliding frames.

Furthermore, between the lifting mechanisms and corresponding laser heads are provided position adjustment mechanisms, and positions between the lifting mechanisms and the laser heads are adjustable through the position adjustment mechanisms.

Furthermore, the first driving module comprises a first driving motor and a transmission gear set; the first driving motor drives the first rotating shaft, the feeding device and the discharging device to move synchronously through the transmission gear set.

Furthermore, the label-free marking device further comprises a first detection camera and a second detection camera; the first detection camera is arranged at one side where the feeding device and the disc-shaped conveying module are connected, and is used to detect whether the bottle bodies enter the disc-shaped conveying module; the second detection camera is arranged at one side where the discharging device and the disc-shaped conveying module are connected, and is used to detect whether there are relevant markings on the bottle bodies.

The present invention has following beneficial effects:
1) The laser heads move synchronously with the disc-shaped conveying module, makes clearer print markings and achieves faster marking speed.
2) The pressing assemblies and the first cam disc cooperate with each other, and a mechanical transmission is adopted, which improves reliability and has low cost.
3) The lifting mechanisms are adopted to make the laser heads follow better and the cost is low.

It should be understood that both the foregoing general description and following detailed description are exemplary and are intended to provide further explanation of technology as claimed.

### Brief Description of the Drawings

Figure 1 is a schematic diagram of a stereogram according to an embodiment of the present invention.
Figure 2 is a front view of figure 1.
Figure 3 is a schematic diagram of a first partial stereogram according to an embodiment of the present invention.
Figure 4 is an enlarged view of figure 3 in an A direction.
Figure 5 is a schematic diagram of a lifting mechanism according to an embodiment of the present invention.
Figure 6 is a top view of figure 3.
Figure 7 is a schematic diagram of a second partial stereogram according to an embodiment of the present invention.
Figure 8 is an enlarged view of figure 7 in a B direction.
Figure 9 is a schematic diagram of a first pressing mechanism according to an embodiment of the present invention.
Figure 10 is a left view of figure 7.
Figure 11 is an enlarged view of figure 10 in a C direction.
Figure 12 is a schematic diagram of a shape of a first cam track or a second cam track according to an embodiment of the present invention.
Figure 13 is a schematic diagram of a first cam disc and a pair of first fixing frames fixedly connected according to an embodiment of the present invention.

### Specific Embodiments

The following is a detailed description of preferred embodiments of the present invention in conjunction with attached drawings to further elaborate the present invention.

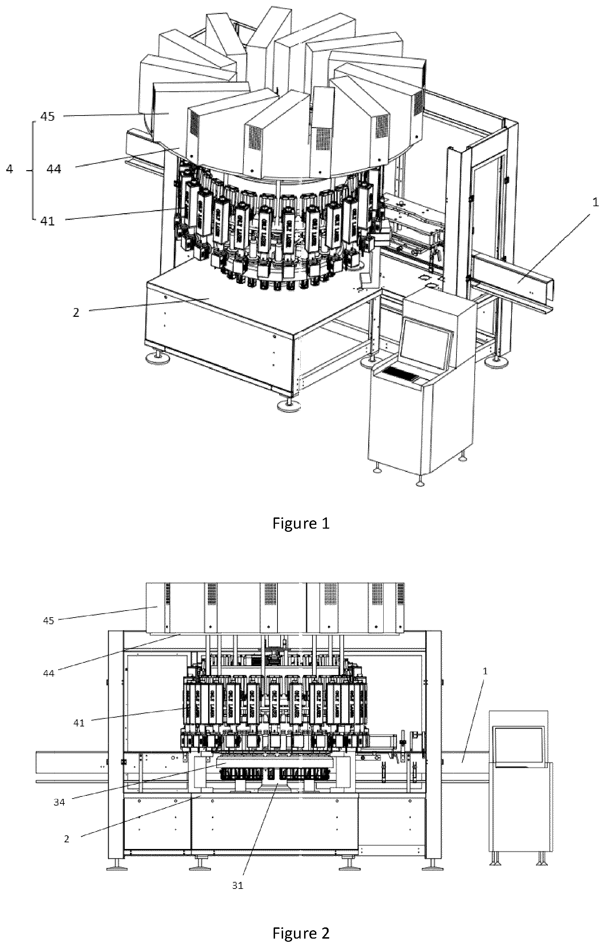

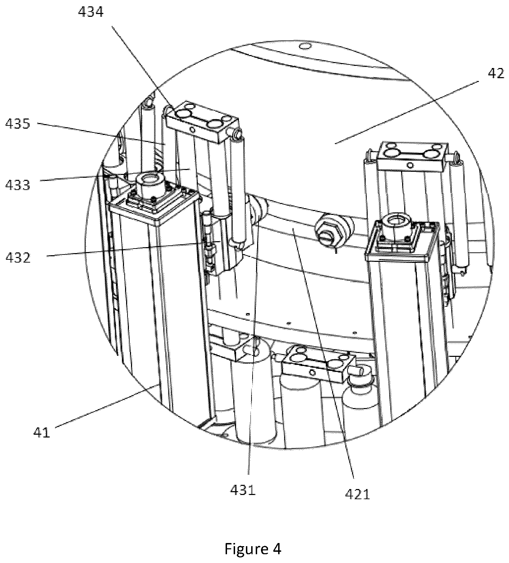

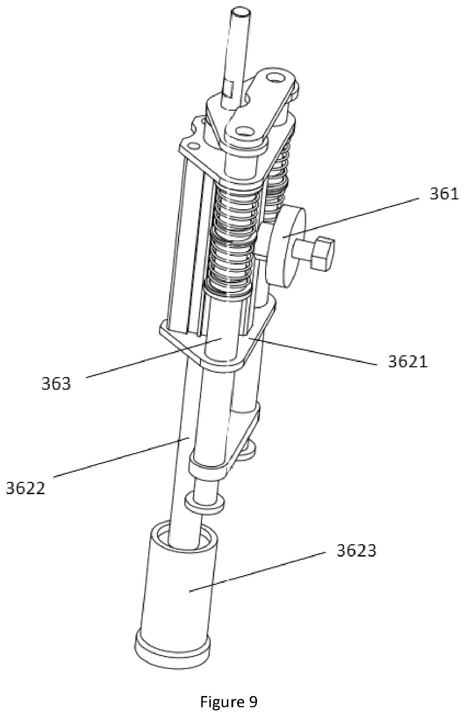

First, a label-free marking device according to embodiments of the present invention will be described in conjunction with figures 1-13, which is used for marking bottles and has a wide range of application scenarios.

As shown in figures 1-13, in an embodiment of the present invention, a label-free marking device is connectable with an external conveying device 1, the external conveying device 1 comprises a conveyor 11, a feeding device 12 and a discharging device 13; and the label-free marking device comprises:
a frame 2;
a disc-shaped conveying module 3, wherein the disc-shaped conveying module 3 is connectable with both the feeding device 12 and the discharging device 13, so as to allow packaging bottles to enter the disc-shaped conveying module 13 from the feeding device 12, and to return to the conveyor 11 through the discharging device 13 once label printing on the disc-shaped conveying module 3 is completed;
a laser marking module 4, wherein the laser marking module 4 comprises laser heads 41, the laser heads 41 are arranged on, and distributed around a circumference of, the disc-shaped conveying module 3, such that the laser heads 41 are movable with the disc-shaped conveying module 3 to mark the packaging bottles at corresponding positions with a good marking effect and a fast marking speed; and
a first driving module 5, wherein an output end portion of the first driving module 5 is connected with the disc-shaped conveying module 3, so as to drive the disc-shaped conveying module 3 to rotate.

Specifically, as shown in figures 2-3, 6-8 and 10-13, in the present embodiment, the disc-shaped conveying module 3 comprises a first rotating shaft 31, a first cam disc 32, a pair of first fixing frames 33, a first active rotating disc 34, a first follower disc 35, first pressing mechanisms 36 and storage trays 37;
the first rotating shaft 31 is connected to an output end portion of the first driving module 5;
the first cam disc 32 is sleeved on the first rotating shaft 31 and free from rotation of the first rotating shaft 31, and an outer ring of the first cam disc 32 is provided with a first cam track 321;
the pair of first fixing frames 33 are respectively arranged on both sides of the first cam disc 32 and connected to the first cam disc 32, and are used to fix the first cam disc 32;
the first follower disc 35 and the first active disc 34 are sequentially sleeved on the first rotating shaft 31 and are configured to rotate with the first rotating shaft 31; the first active disc 34 is provided with storage trays 37 for placing bottle bodies; and
the first follower disc 35 is provided with first pressing mechanisms 36 each corresponding to a respective storage tray 37 ; sides of the first pressing mechanism are provided with first pulleys 361 which are slidably connected to the first cam disc 32 through the first cam track 321 and are arranged to move up and down while moving along circumference of the first cam disc 32, so as to press or loosen the bottle bodies; and the first pressing mechanisms 36 cooperate with the first cam track 321 to achieve good transmission and avoid failure.

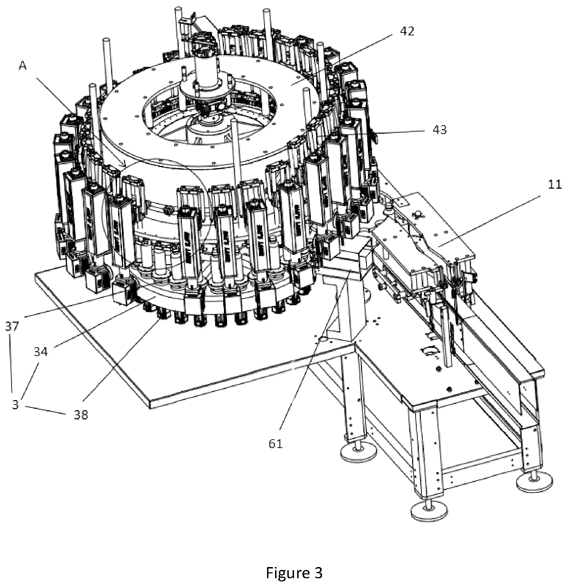

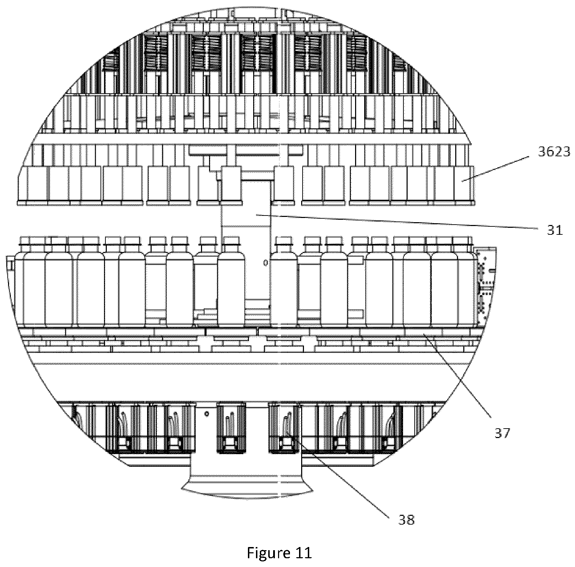

Furthermore, as shown in figure 3 and figure 11, in the present embodiment, under the storage trays 37 are correspondingly arranged rotating motors 38, the rotating motors 38 drive corresponding storage trays 37 to rotate, and during a marking process of the laser heads 41, the bottle bodies can be rotated according to marking requirements.

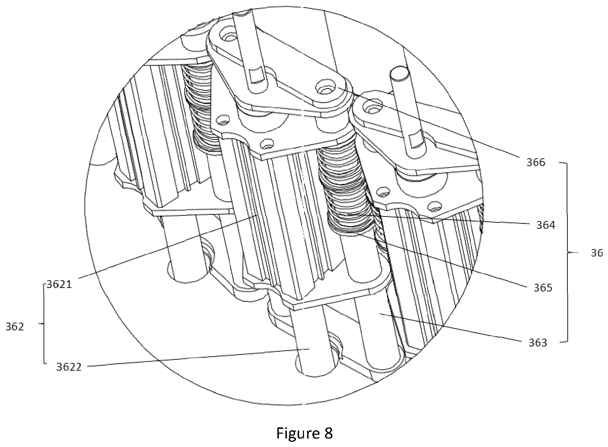

Further, as shown in figures 8-9, in the present embodiment, the first pressing mechanisms 36 comprise first pressing assemblies 362 and pairs of first guide rods 363;
the pairs of first guide rods 363 are arranged on the first follower disc 35;
the first pressing assemblies 362 are sleeved on the pairs of first guide rods 363 and are arranged to slide along the pairs of first guide rods 363; and
the first pulleys 361 are arranged at sides of the first pressing assemblies 362 and are slidably connected to the first cam disc 321 through the first cam track 32, and are arranged to move up and down while moving along circumference of the first cam disc 32.

Furthermore, as shown in figures 8-9, in the present embodiment, the first pressing mechanisms further comprise pairs of first springs 364 and pairs of clamping springs 365;
the pairs of first springs 364 are respectively sleeved on the pairs of first guide rods 363;
the pairs of clamping springs 365 respectively correspond to the pairs of first springs 364 one by one, are respectively arranged at lower end portions of corresponding pairs of first springs 364, and are fixedly connected to the pairs of first guide rods 363; and
the pairs of first springs 364 are arranged between the first pressing assemblies 362 and the pairs of clamping springs 365, and the pairs of first springs 364 are used to buffer the first pressing assemblies 362 and assist the first pressing assemblies 362 to reset.

Furthermore, as shown in figures 8-9, in the present embodiment, the first pressing assemblies 362 comprise first sliding frames 3621, first pressing rods 3622 and first pressing sleeves 3623;
the first sliding frames 3621 are sleeved on the pairs of first guide rods 363, and the first pulleys 361 are arranged at sides of the first sliding frames 3621;
end portions of the first pressing rods 3622 are connected to the first sliding frames 3621, another end portions thereof are movably connected to the first pressing sleeves 3623, and the first pressing sleeves 3623 are rotatable around shafts thereof, so that when the rotating motors 38 drive the storage trays 37 to rotate, the bottle bodies can follow the rotation better.

Furthermore, as shown in figures 8-9, in the present embodiment, the first pressing mechanisms 36 further comprise first fixing plates 366, and the first fixing plates 366 are disposed at upper end portions of the pairs of first guide rods 363 and are fixedly connected to the pairs of first guide rods 363, which on the one hand makes structures of the pairs of first guide rods 363 more stable, and on the other hand is used to limit positions of the first sliding frames 3621.

Furthermore, as shown in figures 1-5, in the present embodiment, the laser marking module 4 further comprises a second cam disc 42, lifting mechanisms 43, a second follower disc 44 and laser head controllers 45;
the second cam disc 42 is fixedly connected to the first cam disc 32 via connecting columns, and a second cam track 421 is arranged on an outer ring of the second cam disc 42;
the second follower disc 44 is fixedly connected to the first follower disc 35 through connecting columns, so as to move synchronously with the first follower disc 35;
the lifting mechanisms 43 respectively correspond to and are connected to the laser heads 41 one by one, and second pulleys 431 are arranged at sides of the lifting mechanisms 43, the second pulleys 431 are slidably connected to the second cam disc 42 through the second cam track 421, and are arranged to move up and down while moving along circumference of the second cam disc 42;
the laser head controllers 45 respectively correspond to the laser heads 41 one by one and are arranged on the second follower disc 44;

Furthermore, as shown in figures 1-5, in the present embodiment, the lifting mechanisms 43 comprise second sliding frames 432 and pairs of second guide rods 433;
the second sliding frames 432 are sleeved on the pairs of second guide rods 433 and are arranged to slide relative to the pairs of second guide rods 433; the second pulleys 431 are arranged at sides of the second sliding frames 432 and are arranged to drive the second sliding frames 432 to move; and
the pairs of second guide rods 433 are fixedly connected to the first follower disc 35.

Furthermore, the lifting mechanisms 43 further comprise second fixed plates 434 and pairs of second springs 435;
the second fixing plates 434 are arranged at upper end portions of the pairs of second guide rods 433 and are fixedly connected to the pairs of second guide rods 433, which on the one hand makes structures of the pairs of second guide rods 433 more stable, and on the other hand is used to limit positions of the second sliding frames 432; and
the pairs of second springs 435 are respectively arranged at two end portions of the second fixing plates 434, end portions of the second springs 435 are connected to the second fixing plates 434, and another end portions thereof are connected to the second sliding frames 432; the pairs of second springs 435 are arranged, which on the one hand buffers the second sliding frames 432 and assists in resetting the second sliding frames 432, on the other hand, offers the second sliding frames 432 upward pulling forces, so that the pressure between the second pulleys 431 and an upper wall of the second cram track 421 is almost zero, thereby greatly reducing the friction between the second pulleys 431 and the upper wall of the second cam track 421 during movement..

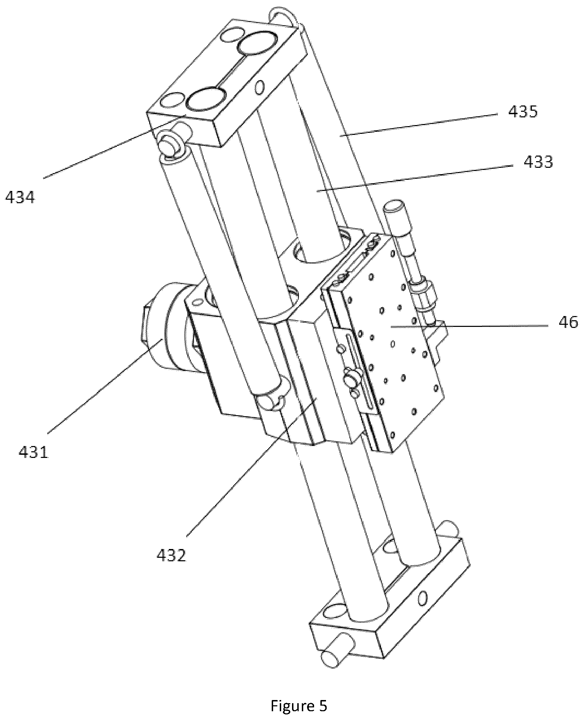

Furthermore, as shown in figure 5, in the present embodiment, between the lifting mechanisms 43 and corresponding laser heads 41 are provided position adjustment mechanisms 46, and positions between the lifting mechanisms 43 and the laser heads 41 are adjustable through the position adjustment mechanisms 46, so as to enable the laser heads 41 are in best marking positions.

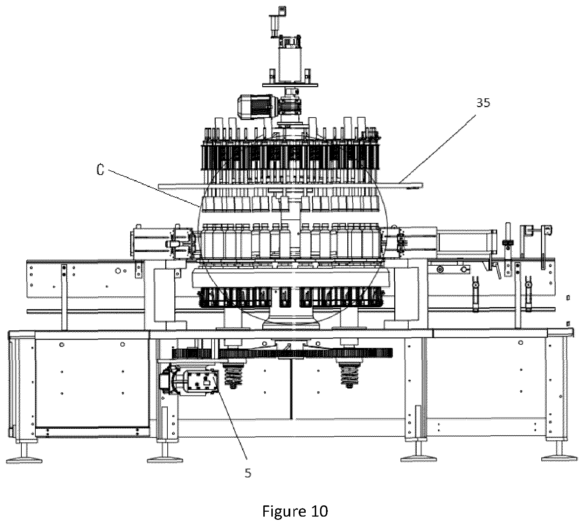

Furthermore, as shown in figure 10, in the present embodiment, the first driving module 5 comprises a first driving motor and a transmission gear set; the first driving motor drives the first rotating shaft 31, the feeding device 12 and the discharging device 13 to move synchronously through the transmission gear set.

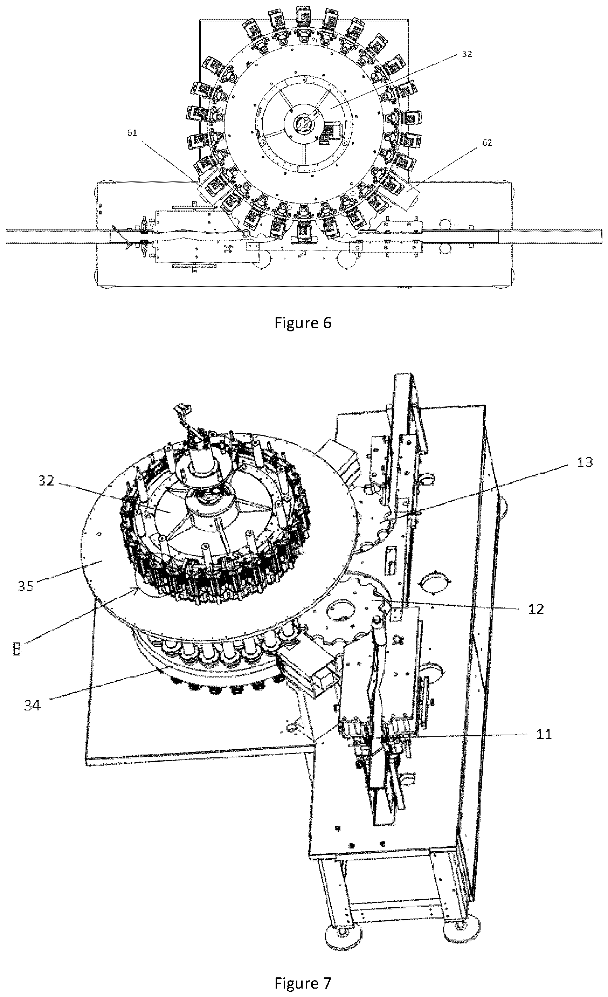

Furthermore, as shown in figures 3 and 6, in the present embodiment, the label-free marking device further comprises a first detection camera 61 and a second detection camera 62; the first detection camera 61 is arranged at one side where the feeding device 12 and the disc-shaped conveying module 3 are connected, and is used to detect whether the bottle bodies enter the disc-shaped conveying module 3; the second detection camera 62 is arranged at one side where the discharging device 13 and the disc-shaped conveying module 3 are connected, and is used to detect whether there are relevant markings on the bottle bodies.

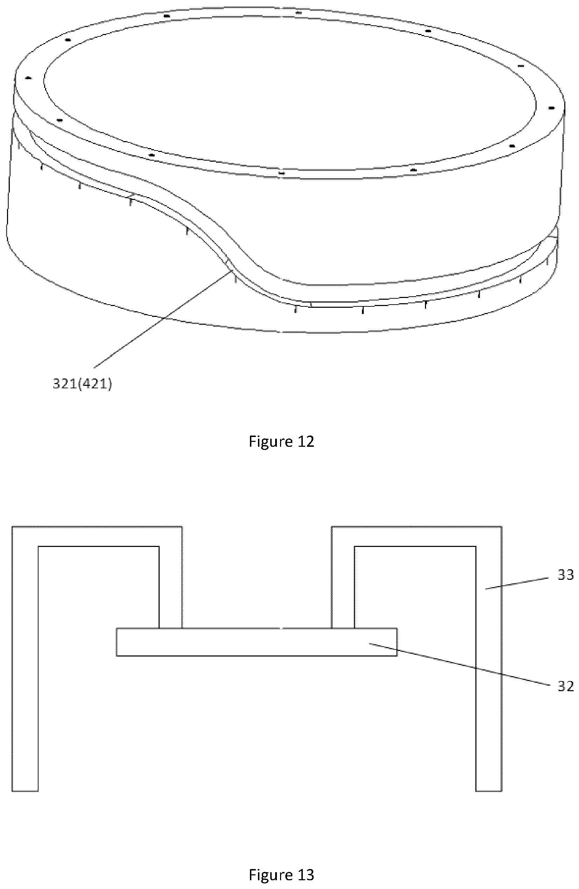

Furthermore, as shown in figure 12, in the present embodiment, the first cam track 321 and the second cam track 421 comprise similar shapes and structures.

Working principles of the present invention are as follows: first, bottle bodies enter the storage trays 37 of the disc-shaped conveying module 3 from the feeding device 12, at this point, the first pressing assemblies 362 move with the first pulleys 361 from high positions to low positions of the first cam track 321, so as to press the bottle bodies with the first pressing sleeves 3623, then, the laser heads 41 corresponding to the bottle bodies move with the second pulleys 431 from high positions to low positions of the second cam track 421 and begin marking the bottle bodies; after the bottle bodies are marked during motion thereof, the first pressing assemblies 362 move with the first pulleys 361 from low positions to high positions of the first cam track 321, while the laser heads 41 at corresponding positions on the bottle bodies move with the second pulleys 431 from low positions to high positions of the second cam track 421 and the bottle bodies are discharged from the discharging device 13 and returned to the conveyor 11; and the same goes for all the bottle bodies.

The above describes the label-free marking device according to an embodiment of the present invention with reference to figures 1 to 13, the laser heads move synchronously with the disc-shaped conveying module, to print clearer markings, and achieve faster marking speed; the pressing assemblies and the first cam disc cooperate with each other to adopt mechanical transmission, which improves reliability and has low cost; the lifting mechanisms are adopted to make the laser heads follow better and the cost is lower.

It should be noted that in this specification, the terms "comprises," "comprising," or any other variations are intended to encompass a non-exclusive inclusion, such that processes, methods, items, or devices comprising a series of elements include not only those elements explicitly listed but also other elements not explicitly listed or inherent to such processes, methods, items, or devices. In the absence of further limitations, elements specified by the phrase "including..." do not exclude the presence of additional identical elements in processes, methods, items, or devices that include those elements.

Although contents of the present invention have been detailed in the preferred embodiments described above, it should be recognized that the above description should not be considered as limiting the present invention. After reading the foregoing description, those skilled in the art will recognize various modifications and alternatives to the present invention. Therefore, the scope of protection of the present invention should be defined by the appended claims.

## Claims

1. A label-free marking device, connectable with an external conveying device,
wherein the external conveying device comprises a conveyor, a feeding device (12) and a discharging device (13), and the label-free marking device comprising:
a frame (2);
a disc-shaped conveying module (3), wherein the disc-shaped conveying module is
connectable with both the feeding device and the discharging device, so as to allow packaging bottles to enter the disc-shaped conveying module from the feeding device, and to return to the conveyor through the discharging device once label printing on the disc-shaped conveying module is completed;
a laser marking module (4), wherein the laser marking module comprises laser heads (41), the
laser heads are arranged on, and distributed around a circumference of, the disc-shaped conveying module, such that the laser heads are movable with the disc-shaped conveying module to mark the packaging bottles at corresponding positions; **characterised in that** the device further comprises
a first driving module (5), wherein an output end portion of the first driving module is connected with the disc-shaped conveying module, so as to drive the disc-shaped conveying module to rotate;
the disc-shaped conveying module comprises a first rotating shaft (31), a first cam disc (32), a
pair of first fixing frames (33), a first active rotating disc (34), a first follower disc (35), first pressing mechanisms (36) and storage trays (37);
the first rotating shaft is connected to an output end portion of the first driving module;
the first cam disc is sleeved on the first rotating shaft and free from rotation of the first
rotating shaft, and an outer ring of the first cam disc is provided with a first cam track (321);
the pair of first fixing frames are respectively arranged on both sides of the first cam disc and connected to the first cam disc, and are used to fix the first cam disc;
the first follower disc and the first active disc are sequentially sleeved on the first rotating shaft and are configured to rotate with the first rotating shaft; the first active disc is provided with storage trays for placing bottle bodies;
the first follower disc is provided with first pressing mechanisms (362) respectively
corresponding to the storage trays one by one; sides of the first pressing mechanism are provided with first pulleys (361) which are slidably connected to the first cam disc
through the first cam track and are arranged to move up and down while moving along circumference of the first cam disc, so as to press or loosen the bottle bodies;
the laser marking module further comprises a second cam disc (42), lifting mechanisms (43), a second follower disc (44) and laser head controllers (45);
the second cam disc is fixedly connected to the first cam disc via connecting columns,
and a second cam track (421) is arranged on an outer ring of the second cam disc;
the second follower disc is fixedly connected to the first follower disc through connecting columns, so as to move synchronously with the first follower disc;
the lifting mechanisms respectively correspond to and are connected to the laser heads one by one, and second pulleys (431) are arranged at sides of the lifting mechanisms,
the second pulleys are slidably connected to the second cam disc through the second cam track, and are arranged to move up and down while moving along circumference of the second cam disc;
the laser head controllers respectively correspond to the laser heads one by one and are arranged on the second follower disc;
the lifting mechanisms comprise second sliding frames (432) and pairs of second guide rods (433);
the second sliding frames are sleeved on the pairs of second guide rods and are arranged to slide relative to the pairs of second guide rods; the second pulleys are arranged at sides of the second sliding frames and are arranged to drive the second sliding frames to move;
the pairs of second guide rods are fixedly connected to the first follower disc;
the lifting mechanisms further comprise second fixed plates (434) and pairs of second springs (435);
the second fixing plates are arranged at upper end portions of the pairs of second guide rods and are fixedly connected to the pairs of second guide rods; and
the pairs of second springs are respectively arranged at two end portions of the second fixing plates, end portions of the second springs are connected to the second fixing plates, and another end portions thereof are connected to the second sliding frames.

2. The label-free marking device according to claim 1, wherein the first pressing mechanisms comprise first pressing assemblies and pairs of first guide rods;
the pairs of first guide rods are arranged on the first follower disc;
the first pressing assemblies are sleeved on the pairs of first guide rods and are arranged to slide along the pairs of first guide rods; and
the first pulleys are arranged at sides of the first pressing assemblies and are slidably connected to the first cam disc through the first cam track, and are arranged to move up and down while moving along circumference of the first cam disc.

3. The label-free marking device according to claim 2, wherein the first pressing mechanisms further comprise pairs of first springs and pairs of clamping springs;
the pairs of first springs are respectively sleeved on the pairs of first guide rods;
the pairs of clamping springs respectively correspond to the pairs of first springs one by one, are respectively arranged at lower end portions of corresponding pairs of first springs, and are fixedly connected to the pairs of first guide rods; and
the pairs of first springs are arranged between the first pressing assemblies and the pairs of clamping springs.

4. The label-free marking device according to claim 2 or 3, wherein the first pressing assemblies comprise first sliding frames, first pressing rods and first pressing sleeves;
the first sliding frames are sleeved on the pairs of first guide rods, and the first pulleys are arranged at sides of the first sliding frames;
end portions of the first pressing rods are connected to the first sliding frames, another end portions thereof are movably connected to the first pressing sleeves, and the first pressing sleeves are rotatable around shafts thereof.

5. The label-free marking device according to claim 2 or 3, wherein the first pressing mechanisms further comprise first fixing plates, and the first fixing plates are disposed at upper end portions of the pairs of first guide rods and are fixedly connected to the pairs of first guide rods.

6. The label-free marking device according to claim 1, wherein between the lifting mechanisms and corresponding laser heads are provided position adjustment mechanisms, and positions between the lifting mechanisms and the laser heads are adjustable through the position adjustment mechanisms.

## Patentansprüche

1. Etikettenfreie Markierungsvorrichtung, die mit einer externen Fördervorrichtung verbindbar ist, wobei die externe Fördervorrichtung einen Förderer, eine Zuführeinrichtung (12) und eine Abführeinrichtung (13) umfasst und die etikettierungsfreie Markierungsvorrichtung umfasst:
einen Rahmen (2);
ein scheibenförmiges Fördermodul (3), wobei das scheibenförmige Fördermodul sowohl mit der Zuführeinrichtung als auch mit der Abführeinrichtung verbunden werden kann, so dass Verpackungsflaschen von der Zuführeinrichtung in das scheibenförmige Fördermodul eintreten und durch die Abführeinrichtung zum Förderer zurückkehren können, sobald der Etikettendruck auf dem scheibenförmigen Fördermodul abgeschlossen ist;
ein Lasermarkierungsmodul (4), wobei das Lasermarkierungsmodul Laserköpfe (41) umfasst, wobei die Laserköpfe um den Umfang des scheibenförmigen Fördermoduls verteilt und daran angebracht ist, so dass die Laserköpfe mit dem scheibenförmigen Fördermodul beweglich sind, um die Verpackungsflaschen an entsprechenden Positionen zu markieren; **dadurch gekennzeichnet, dass** die Vorrichtung ferner ein erstes Antriebsmodul (5) umfasst, wobei ein Ausgangsendabschnitt des ersten Antriebsmoduls mit dem scheibenförmigen Fördermodul verbunden ist, um das scheibenförmige Fördermodul zum Drehen anzutreiben;
wobei das scheibenförmige Fördermodul eine erste Drehwelle (31), eine erste Nockenscheibe (32), ein Paar von ersten Befestigungsrahmen (33), eine erste aktive rotierende Scheibe (34), eine erste Mitnehmerscheibe (35), erste Andruckmechanismen (36) und Ablagefächer (37) umfasst;
wobei die erste Drehwelle mit einem Ausgangsendabschnitt des ersten Antriebsmoduls verbunden ist;
wobei die erste Nockenscheibe auf die erste Drehwelle aufgesteckt und frei von der Drehung der ersten Drehwelle ist, und ein Außenring der ersten Nockenscheibe mit einer ersten Nockenführung (321) versehen ist;
wobei das Paar von ersten Befestigungsrahmen jeweils auf beiden Seiten der ersten Nockenscheibe angeordnet und mit der ersten Nockenscheibe verbunden ist und zur Befestigung der ersten Nockenscheibe dient;
wobei die erste Mitnehmerscheibe und die erste aktive Scheibe nacheinander auf der ersten Drehwelle aufgesetzt und so konfiguriert sind, dass sie sich mit der ersten Drehwelle drehen; die erste aktive Scheibe mit Aufbewahrungsfächer zum Platzieren von Flaschenkörpern ausgestattet ist;
wobei die erste Mitnehmerscheibe mit ersten Andruckmechanismen (362) versehen ist, die jeweils eins zu eins den Aufbewahrungsfächern entsprechen; an den Seiten des ersten Andruckmechanismus erste Rollen (361) angebracht sind, die gleitend mit der ersten Nockenscheibe über die erste Nockenführung verbunden sind und so ausgeführt sind, dass sie sich auf- und abbewegen, während sie sich entlang des Umfangs der ersten Nockenscheibe bewegen, um die Flaschenkörper zu drücken oder zu lösen;
wobei das Lasermarkierungsmodul ferner eine zweite Nockenscheibe (42), Hubmechanismen (43), eine zweite Mitnehmerscheibe (44) und Laserkopfsteuerungen (45) umfasst;
wobei die zweite Nockenscheibe über Verbindungssäulen fest mit der ersten Kurvenscheibe verbunden ist,
wobei und eine zweite Nockenführung (421) auf einem Außenring der zweiten Nockenscheibe angeordnet ist;
wobei die zweite Mitnehmerscheibe durch Verbindungssäulen fest mit der ersten Mitnehmerscheibe verbunden ist, um sich synchron mit der ersten Mitnehmerscheibe zu bewegen;
wobei die Hebemechanismen jeweils eins zu eins den Laserköpfen entsprechen und mit diesen verbunden sind, und zweite Rollen (431) an den Seiten der Hebemechanismen angeordnet sind,
wobei die zweiten Rollen gleitend mit der zweiten Nockenscheibe über die zweite Nockenführung verbunden und so eingerichtet sind, dass sie sich auf und ab bewegen, während sie sich entlang des Umfangs der zweiten Nockenscheibe bewegen;
wobei die Laserkopfsteuerungen jeweils den Laserköpfen eins zu eins entsprechen und auf der zweiten Mitnehmerscheibe angeordnet sind;
wobei die Hubmechanismen zweite Schlittenrahmen (432) und Paare von zweiten Führungsstangen (433) umfassen;
wobei die zweiten Schlittenrahmen auf den Paaren von zweiten Führungsstangen aufgesetzt und so eingerichtet sind, dass sie relativ zu den Paaren von zweiten Führungsstangen gleitet; die zweiten Rollen an Seiten der zweiten Schlittenrahmen angebracht und dazu eingerichtet sind, die zweiten Schlittenrahmen zu Bewegung anzutreiben;
wobei die Paare der zweiten Führungsstangen fest mit der ersten Mitnehmerscheibe verbunden sind;
wobei die Hubmechanismen ferner zweite feststehende Platten (434) und Paare von zweiten Federn (435) umfassen;
wobei die zweiten Befestigungsplatten an oberen Endabschnitten der Paare von zweiten Führungsstangen angeordnet und fest mit den Paaren von zweiten Führungsstangen verbunden sind; und
die Paare von zweiten Federn jeweils an beiden Endabschnitten der zweiten Befestigungsplatten angeordnet sind,
Endabschnitte der zweiten Federn mit den zweiten Befestigungsplatten verbunden sind, und ihre anderen Endabschnitte mit den zweiten Schlittenrahmen verbunden sind.

2. Etikettierungsfreie Markierungsvorrichtung nach Anspruch 1, **dadurch gekennzeichnet, dass** die ersten Andruckmechanismen erste Andruckgruppen und Paare von ersten Führungsstangen umfassen;
wobei die Paare von ersten Führungsstangen auf der ersten Mitnehmerscheibe angeordnet sind;
wobei die ersten Andruckgruppen auf die Paare von ersten Führungsstangen aufgesteckt sind und so eingerichtet sind, dass sie entlang der Paare von ersten Führungsstangen gleiten können;
wobei die ersten Rollen an Seiten der ersten Andruckgruppen angeordnet sind und gleitend durch die erste Nockenführung mit der ersten Nockenscheibe verbunden sind, wobei sie so eingerichtet sind, dass sie sich auf und ab bewegen, während sie sich entlang des Umfangs der ersten Nockenscheibe bewegen.

3. Etikettierungsfreie Markierungsvorrichtung nach Anspruch 2, wobei die ersten Andruckmechanismen ferner Paare von ersten Federn und Paare von Klemmfedern umfassen;
wobei die Paare von ersten Federn jeweils auf die Paare von ersten Führungsstangen aufgesteckt sind;
wobei die Paare von Klemmfedern jeweils eins zu eins den Paaren von ersten Federn entsprechen, jeweils an unteren Endabschnitten der entsprechenden Paare von ersten Federn angeordnet sind und fest mit den Paaren von ersten Führungsstangen verbunden sind; und
wobei die Paare von ersten Federn zwischen den ersten Andruckgruppen und den Paaren von Klemmfedern angeordnet sind.

4. Etikettierungsfreie Markierungsvorrichtung nach Anspruch 2 oder 3, **dadurch gekennzeichnet, dass** die ersten Andruckgruppen erste Schlittenrahmen, erste Andruckstangen und erste Andruckhülsen umfassen;
wobei die ersten Schlittenrahmen auf die Paare von ersten Führungsstangen aufgesteckt sind, und die ersten Rollen an den Seiten der ersten Schlittenrahmen angebracht sind;
wobei Endabschnitte der ersten Andruckstangen mit den ersten Schlittenrahmen verbunden sind, andere Endabschnitte davon beweglich mit den ersten Andruckhülsen verbunden sind, und die ersten Andruckhülsen um ihre Achsen drehbar sind.

5. Etikettierungsfreie Markierungsvorrichtung nach Anspruch 2 oder 3, wobei die ersten Andruckmechanismen ferner erste Befestigungsplatten umfassen, und die ersten Befestigungsplatten an oberen Endabschnitten der Paare von ersten Führungsstangen angeordnet und fest mit den Paaren von ersten Führungsstangen verbunden sind.

6. Etikettierungsfreie Markierungsvorrichtung nach Anspruch 1, **dadurch gekennzeichnet, dass** zwischen den Hubmechanismen und entsprechenden Laserköpfen Positionsjustiermechanismen vorgesehen sind und Positionen zwischen den Hubmechanismen und den Laserköpfen durch die Positionsjustiermechanismen einstellbar sind.

## Revendications

1. Dispositif de marquage sans étiquette, pouvant être relié à un dispositif de transport externe, dans lequel le dispositif de transport externe comprend un convoyeur, un dispositif d'alimentation (12) et un dispositif de déchargement (13), et le dispositif de marquage sans étiquette comprenant :
un cadre (2) ;
un module de transport en forme de disque (3), dans lequel le module de transport en forme de disque peut être relié à la fois au dispositif d'alimentation et au dispositif de déchargement, afin de permettre à des bouteilles d'emballage d'entrer dans le module de transport en forme de disque à partir du dispositif d'alimentation, et de retourner au convoyeur par l'intermédiaire du dispositif de déchargement une fois l'impression d'étiquette sur le module de transport en forme de disque terminée ;
un module de marquage laser (4), dans lequel le module de marquage laser comprend des têtes laser (41), les têtes laser sont disposées sur le module de transport en forme de disque et réparties autour de sa circonférence, de sorte que les têtes laser puissent se déplacer avec le module de transport en forme de disque afin de marquer les bouteilles d'emballage au niveau de positions correspondantes ;
un premier module d'entraînement (5), dans lequel une partie d'extrémité de sortie du premier module d'entraînement est reliée au module de transport en forme de disque, afin d'entraîner le module de transport en forme de disque en rotation ;
le module de transport en forme de disque comprend un premier arbre rotatif (31), un premier disque à came (32), une paire de premiers cadres de fixation (33), un premier disque rotatif actif (34), un premier disque suiveur (35), des premiers mécanismes de pression (36) et des plateaux de stockage (37) ;
le premier arbre rotatif est relié à une partie d'extrémité de sortie du premier module d'entraînement ;
le premier disque à came est manchonné sur le premier arbre rotatif et exempt de rotation par rapport au premier arbre rotatif, et une bague externe du premier disque à came est pourvue d'une première piste de came (321) ;
la paire de premiers cadres de fixation est respectivement disposée de deux côtés du premier disque à came et reliée au premier disque à came, et sert à fixer le premier disque à came ;
le premier disque suiveur et le premier disque actif sont manchonnés séquentiellement sur le premier arbre rotatif et sont conçus pour tourner avec le premier arbre rotatif ; le premier disque actif est pourvu de plateaux de stockage destinés à placer des corps de bouteilles ;
le premier disque suiveur est pourvu de premiers mécanismes de pression (362) correspondant respectivement aux plateaux de stockage un par un ; des côtés du premier mécanisme de pression sont pourvus de premières poulies (361) qui sont reliées de manière coulissante au premier disque à came par l'intermédiaire de la première piste de came et sont disposées pour se déplacer vers le haut et vers le bas tout en se déplaçant le long d'une circonférence du premier disque à came, afin de presser ou de desserrer les corps de bouteilles ;
le module de marquage laser comprend en outre un second disque à came (42), des mécanismes de levage (43), un second disque suiveur (44) et des dispositifs de commande de tête laser (45) ;
le second disque à came est relié de manière fixe au premier disque à came par l'intermédiaire de colonnes de liaison, et une seconde piste de came (421) est disposée sur une bague externe du second disque à came ;
le second disque suiveur est relié de manière fixe au premier disque suiveur par l'intermédiaire de colonnes de liaison, afin de se déplacer de manière synchrone avec le premier disque suiveur ;
les mécanismes de levage correspondent respectivement et sont reliés aux têtes laser une par une, et des secondes poulies (431) sont disposées au niveau de côtés des mécanismes de levage, les secondes poulies sont reliées de manière coulissante au second disque à came par l'intermédiaire de la seconde piste de came, et sont disposées pour se déplacer vers le haut et vers le bas tout en se déplaçant le long d'une circonférence du second disque à came ;
les dispositifs de commande de tête laser correspondent respectivement aux têtes laser une par une et sont disposés sur le second disque suiveur ;
les mécanismes de levage comprennent des seconds cadres coulissants (432) et des paires de secondes tiges de guidage (433) ;
les seconds cadres coulissants sont manchonnés sur les paires de secondes tiges de guidage et sont disposés pour coulisser par rapport aux paires de secondes tiges de guidage ; les secondes poulies sont disposées au niveau de côtés des seconds cadres coulissants et sont disposées pour entraîner les seconds cadres coulissants en déplacement ;
les paires de secondes tiges de guidage sont reliées de manière fixe au premier disque suiveur ;
les mécanismes de levage comprennent en outre des secondes plaques de fixation (434) et des paires de seconds ressorts (435) ;
les secondes plaques de fixation sont disposées au niveau de parties d'extrémité supérieure des paires de secondes tiges de guidage et sont reliées de manière fixe aux paires de secondes tiges de guidage ; et
les paires de seconds ressorts sont respectivement disposées au niveau de deux parties d'extrémité des secondes plaques de fixation, des parties d'extrémité des seconds ressorts sont reliées aux secondes plaques de fixation, et d'autres parties d'extrémité de ceux-ci sont reliées aux seconds cadres coulissants.

2. Dispositif de marquage sans étiquette selon la revendication 1, dans lequel les premiers mécanismes de pression comprennent des premiers ensembles de pression et des paires de premières tiges de guidage ;
les paires de premières tiges de guidage sont disposées sur le premier disque suiveur ;
les premiers ensembles de pression sont manchonnés sur les paires de premières tiges de guidage et sont disposés pour coulisser le long des paires de premières tiges de guidage ; et
les premières poulies sont disposées au niveau de côtés des premiers ensembles de pression et sont reliées de manière coulissante au premier disque à came par l'intermédiaire de la première piste de came, et sont disposées pour se déplacer vers le haut et vers le bas tout en se déplaçant le long d'une circonférence du premier disque à came.

3. Dispositif de marquage sans étiquette selon la revendication 2, dans lequel les premiers mécanismes de pression comprennent en outre des paires de premiers ressorts et des paires de ressorts de serrage ;
les paires de premiers ressorts sont respectivement manchonnées sur les paires de premières tiges de guidage ;
les paires de ressorts de serrage correspondent respectivement aux paires de premiers ressorts un par un, sont respectivement disposées au niveau de parties d'extrémité inférieure de paires correspondantes de premiers ressorts, et sont reliées de manière fixe aux paires de premières tiges de guidage ; et
les paires de premiers ressorts sont disposées entre les premiers ensembles de pression et les paires de ressorts de serrage.

4. Dispositif de marquage sans étiquette selon la revendication 2 ou 3, dans lequel les premiers ensembles de pression comprennent des premiers cadres coulissants, des premières tiges de pression et des premiers manchons de pression ;
les premiers cadres coulissants sont manchonnés sur les paires de premières tiges de guidage, et les premières poulies sont disposées au niveau de côtés des premiers cadres coulissants ;
des parties d'extrémité des premières tiges de pression sont reliées aux premiers cadres coulissants, d'autres parties d'extrémité de celles-ci sont reliées de manière déplaçable aux premiers manchons de pression, et les premiers manchons de pression peuvent tourner autour d'axes de ceux-ci.

5. Dispositif de marquage sans étiquette selon la revendication 2 ou 3, dans lequel les premiers mécanismes de pression comprennent en outre des premières plaques de fixation, et les premières plaques de fixation sont disposées au niveau de parties d'extrémité supérieure des paires de premières tiges de guidage et sont reliées de manière fixe aux paires de premières tiges de guidage.

6. Dispositif de marquage sans étiquette selon la revendication 1, dans lequel des mécanismes de réglage de position sont prévus entre les mécanismes de levage et les têtes laser correspondantes, et des positions entre les mécanismes de levage et les têtes laser sont réglables par l'intermédiaire des mécanismes de réglage de position.
